(19) **Europäisches Patentamt**
**European Patent Office**
**Office européen des brevets**

(11) **EP 2 774 149 B1**

(12) **FASCICULE DE BREVET EUROPEEN**

(45) Date de publication et mention
de la délivrance du brevet:
**25.11.2015 Bulletin 2015/48**

(51) Int Cl.:
*G11B 7/005* ^(2006.01)   *G11B 11/00* ^(2006.01)
*G11B 7/253* ^(2013.01)   *G11B 7/0045* ^(2006.01)
*G11B 7/00* ^(2006.01)   *G11B 7/2437* ^(2013.01)
*G11B 7/243* ^(2013.01)   *G11B 7/246* ^(2013.01)

(21) Numéro de dépôt: **12778692.9**

(22) Date de dépôt: **16.10.2012**

(86) Numéro de dépôt international:
**PCT/EP2012/070504**

(87) Numéro de publication internationale:
**WO 2013/064368 (10.05.2013 Gazette 2013/19)**

(54) **SUPPORT DE STOCKAGE DE DONNEES ET PROCEDE DE LECTURE DE CE SUPPORT**

DATENTRÄGERMEDIUM UND VERFAHREN ZUM LESEN DIESES MEDIUMS

DATA STORAGE MEDIUM AND METHOD OF READING THIS MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2011 FR 1103353**

(43) Date de publication de la demande:
**10.09.2014 Bulletin 2014/37**

(73) Titulaire: **THALES**
**92200 Neuilly-sur-Seine (FR)**

(72) Inventeurs:
• **DEBUISSCHERT, Thierry**
**91400 Orsay (FR)**

• **SPITZ, Erich**
**75013 Paris (FR)**

(74) Mandataire: **Joubert, Cécile et al**
**Marks & Clerk France**
**Counseils en Propriete Industrielle**
**Immeuble "Visium"**
**22, avenue Aristide Briand**
**94117 Arcueil Cedex (FR)**

(56) Documents cités:
**EP-A1- 0 347 772     WO-A1-2010/010344**
**WO-A1-2010/010352     JP-A- 2 260 128**

**Description**

**DOMAINE DE L'INVENTION**

Le domaine de l'invention est celui de l'enregistrement et du stockage de données haute densité et pérenne. Plus particulièrement l'invention concerne l'enregistrement et le stockage de données dans le volume d'un substrat diamant.

**ETAT DE LA TECHNIQUE**

La longévité des composants de stockage de l'information connus, par exemple de type Bus Universel Série, dénommé selon l'acronyme anglo-saxon USB pour « Universal Serial Bus », de type disque compact dénommé selon l'acronyme anglo-saxon CD pour « Compact Disc », ou de type disque digital de données vidéo dénommé DVD pour « Digital Video Disk », est estimée à 10 ans environ. Pour augmenter cette durée de vie, des solutions ont été proposées.

Une première solution consiste à utiliser un support en verre trempé, par exemple le « century disk » de la société Digi Press. Ce support est un disque en verre sur lequel sont déposées des couches d'argent et d'or. La couche d'argent sert à enregistrer les données de type CD ou DVD. La couche d'or est déposée au dessus de la couche d'argent afin d'assurer la protection du disque. Cependant, la pérennité du support en verre n'est pas assurée, car le verre est en fait un liquide très visqueux qui n'a pas les qualités mécaniques d'un matériau cristallin comme par exemple le diamant. Il est connu que les matériaux peuvent se modifier sur des échelles de temps très longues, ces modifications étant difficiles à maitriser. C'est le cas par exemple des vitraux des cathédrales dont le verre flue sur des durées de quelques siècles. De plus, l'enregistrement est assuré sur une couche déposée en surface du substrat, ce qui ne donne pas la même garantie de longévité qu'une inscription dans le volume du matériau.

Une solution alternative est l'utilisation d'un saphir synthétique. La société Amano par exemple développe une technique de gravure à l'échelle micrométrique sur des substrats de saphir synthétique (substrats de 100 et 200 mm) appelés Nanoforme. Les données sont révélées par une couche de nitrure de titane déposée sur la surface du substrat de saphir. Les données enregistrées sont de type analogique. On peut enregistrer jusqu'à 10000 pages A4 sur une surface équivalente à celle d'un disque CD. Il s'agit d'une technique de traitement de surface moins résistante dans le temps qu'une implantation en volume. De surcroît, les données sont enregistrées sous forme analogique, alors que les données modernes sont principalement sous forme numérique. De plus seuls des tests accélérés de vieillissement ont été effectués (ex. attaques chimiques). Il n'y a pas de réel recul sur la longévité du support. On peut penser que tous les processus de dégradation du support n'ont pas nécessairement été appréhendés. Par ailleurs, la dureté du Saphir (dureté Mohs de 9) est plus faible que celle du diamant (dureté Mohs de 10).

Une autre solution décrite dans le document WO2010/010344 est d'utiliser un substrat diamant avec des centres NV, chaque centre NV représentant un bit d'information.

**DESCRIPTION DE L'INVENTION**

Un but de la présente invention est notamment de pallier les inconvénients précités, en proposant un support de stockage de données comprenant un substrat en diamant. Les données sont enregistrées et stockées dans le volume du substrat.

A cet effet selon un aspect de l'invention il est proposé un support de stockage de données caractérisé en ce qu'il comprend un substrat à base de diamant (30) comprenant des centres NV insérés dans la maille cristalline du substrat, chaque centre NV est constitué d'un atome d'azote substitué à un atome de carbone et couplé à une lacune constituée d'une absence de carbone au voisinage immédiat de l'atome d'azote, le couple atome d'azote/lacune constituant un défaut, dénommé communément centre coloré, dans ladite maille cristalline ; les centres NV étant aptes à émettre une onde lumineuse à une longueur d'onde de fluorescence lorsque le substrat est éclairé par une source lumineuse à une longueur d'onde d'excitation apte à exciter la fluorescence desdits centres NV, la longueur d'onde de fluorescence étant distincte de ladite longueur d'onde d'excitation, ledit substrat comprenant des centres NV résiduels selon une concentration donnée $(D(NV)r)$ ; ledit substrat comprenant en outre une pluralité de zones élémentaires de stockage de données distinctes, lesdites zones élémentaires pouvant être altérées de façon à modifier le nombre de centre NV, définissant deux états distincts fonction des données stockées et aptes à être distingués:

  o un premier état non modifié où le premier nombre de centres NV est égal au nombre de centres NV résiduels présents dans ladite zone,
  o un deuxième état modifié où le deuxième nombre de centres NV comprend un nombre donné de centres NV additionnels implantés dans ladite zone;

le premier nombre et le deuxième nombre étant distincts.

A la différence des autres techniques d'enregistrement, le stockage les données selon l'invention s'effectue dans le substrat lui-même et non pas par une gravure en surface et dépôt d'une couche de matériau additionnel. Les centres NV sont selon l'invention réalisés dans la maille cristalline du diamant. Une meilleure résistance dans le temps est ainsi obtenue car l'enregistrement des données n'est pas tributaire de la qualité de raccordement de deux matériaux de nature différente. Il n'est pas non plus nécessaire de déposer de couche de protection sur le diamant car celui-ci est le matériau dont la dureté est la plus importante parmi tous les matériaux connus (dureté Mohs de 10).

Un autre avantage est qu'il permet de stocker des données avec une très longue durée de vie typiquement de quelque siècles, de manière robuste vis-à-vis de l'effacement naturel et vis-à-vis des agressions extérieures. Contrairement aux matériaux synthétiques comme le Saphir, il existe un recul dans le temps sur le diamant. En effet, les diamants anciens connus depuis au moins la fin du Moyen-Age ne se sont pas altérés sur une durée de quelques siècles. De plus, le diamant est très peu sensible aux agressions chimiques et c'est l'un des matériaux les plus résistants aux attaques mécaniques que l'on connaisse.

Avantageusement les données sont aptes à être lues par détection d'une modulation d'une intensité lumineuse de fluorescence émise par lesdits centres NV situés dans les zones élémentaires dudit substrat, la détection collectant une intensité lumineuse de fluorescence liée au nombre de centres NV situés dans un volume d'analyse donné du substrat, et en ce que le nombre de centres NV implantés par zone élémentaire dans ledit deuxième état est supérieur au produit de la concentration de centres NV résiduel par le volume d'analyse, de façon à détecter la présence d'une zone élémentaire dans ledit deuxième état.

L'intensité élémentaire d'une zone implantée est ainsi supérieure au niveau de bruit dû aux centres NV résiduels présents dans le volume d'analyse. Avantageusement les zones élémentaires sont situées dans au moins un plan du substrat (51, 52, 53). Les données stockées dans les zones élémentaires sont ainsi lues facilement par un dispositif optique simple qui éclaire et détecte les données situées sur un même plan.

Avantageusement les zones élémentaires sont situées dans une pluralité de plans séparés entre eux dans l'épaisseur dudit substrat diamant. En utilisant une pluralité de plans, il est possible d'enregistrer l'information dans l'épaisseur du substrat et non plus seulement sur un seul plan. La densité d'information est ainsi augmentée en fonction du nombre de plans exploitables. Pour obtenir le même résultat, les techniques plus usuelles effectuant un enregistrement en surface nécessiteraient d'empiler des couches de nature différentes, ce qui est peu commode.

Avantageusement, les zones élémentaires ont une surface comprise entre 1000 nm$^2$ et 10000 nm$^2$. Un avantage des centres NV dans le diamant est la possibilité de faire du stockage de haute densité. En effet, la taille d'un centre NV est typiquement de l'ordre du nanomètre, ce qui donne la limite ultime de la taille d'une zone d'enregistrement. Selon les limitations actuelles des techniques d'enregistrement (par exemple la gravure par faisceau d'électron), la dimension d'une zone élémentaire est inférieure à 100 nm, ce qui est meilleur que la résolution micrométrique proposée par des techniques classiques.

Avantageusement les zones élémentaires sont circulaires de diamètre compris entre 30 nm et 100 nm. Il est facile d'inscrire des zones circulaires par masquage et implantation ionique. On peut ainsi coder l'information de manière simple par présence ou absence de zones circulaires présentant des centres NV. On se rapproche des techniques de tramage utilisées en imprimerie. Cette possibilité d'inscrire l'information en utilisant des zones toutes identiques se prête bien à l'enregistrement de données numériques qui constituent l'essentiel des données produites aujourd'hui.

Selon une variante, une zone élémentaire unique est présente à l'intérieur du volume d'analyse. Selon une autre variante, une pluralité de zones élémentaires situées dans un même plan sont présentes à l'intérieur dudit volume d'analyse (Va). Avantageusement, le nombre de centres NV implantés dans une zone élémentaire dans le deuxième état est supérieur à environ 100.

En implantant un nombre de centres NV supérieur ou égal à 100, le signal obtenu est supérieur au niveau de bruit dû aux centres NV résiduels présents dans les substrats de haute pureté pouvant être fabriqués aujourd'hui grâce aux techniques de dépôt chimique en phase vapeur ou CVD selon l'acronyme anglo-saxon.

L'invention concerne également l'utilisation d'un substrat à base de diamant comme support de stockage de données.

Afin de lire le support selon l'un des aspects de l'invention, il est proposé un procédé de lecture d'un support de stockage de données comprenant les étapes suivantes :

- éclairer le substrat avec la source lumineuse comprenant une longueur d'onde apte à exciter la fluorescence desdits centres NV, la source étant couplée à des moyens optiques d'éclairement aptes à générer un faisceau lumineux éclairant des centres NV,

- détecter et traiter un faisceau lumineux de fluorescence correspondant à une intensité lumineuse de fluorescence émise à une longueur d'onde de fluorescence provenant des centres NV situés à l'intérieur dudit volume d'analyse, à l'aide de moyens de collecte et de détection, de manière à lire la donnée stockée dans ledit volume,

- ladite intensité étant fonction des intensités élémentaires provenant desdites zones élémentaires éclairées et situées dans le volume d'analyse,

- lesdites intensités élémentaires pouvant prendre une première valeur correspondant audit premier état de ladite zone élémentaire et une deuxième valeur correspondant audit deuxième état de ladite zone élémentaire.

Avantageusement, le procédé comprend l'étape supplémentaire de déplacer l'un par rapport à l'autre ledit substrat et les moyens d'éclairement de collecte et de détection de manière à lire une autre donnée stockée dans une autre zone du plan du substrat.

Avantageusement le faisceau optique d'éclairement et le faisceau lumineux de fluorescence traversent un même système optique. Un avantage est que l'on utilise un système optique unique pour l'éclairement et la détection, ce qui simplifie le procédé de lecture et donc en diminue le coût.

Avantageusement le système optique est un système de microscopie confocale. L'avantage d'un système de microscopie confocale est qu'il est disponible commercialement. Un autre avantage est que la profondeur du volume d'analyse est limitée selon l'axe z ce qui réduit le bruit dû au fond de centres NV résiduels.

Avantageusement, les moyens optiques d'éclairement sont aptes à focaliser un faisceau lumineux provenant de la source d'éclairement à différentes profondeurs du substrat de manière à pouvoir exciter les zones élémentaires situées dans une pluralité de plans séparés entre eux dans l'épaisseur dudit substrat diamant.

Avantageusement, les moyens de collecte sont aptes à capter ladite intensité lumineuse de fluorescence provenant de centres NV appartenant aux zones élémentaires situées dans une pluralité de plans séparés entre eux dans l'épaisseur du substrat diamant. L'avantage est que le procédé est adapté à la lecture de données stockées de manière tridimensionnelles.

D'autres caractéristiques, buts et avantages de la présente invention apparaîtront à la lecture de la description détaillée qui va suivre et en regard des dessins annexés donnés à titre d'exemples non limitatifs et sur lesquels :

- La figure 1 décrit la structure d'un centre NV dans la maille cristalline du diamant.

- La figure 2 décrit le principe de fluorescence d'un centre NV excité par un laser

- La figure 3 décrit le support de donnée selon l'invention vu en coupe.

- La figure 4 décrit une variante préférée de l'invention dans laquelle le support de stockage de données est constitué d'une pluralité de plans séparés entre eux dans l'épaisseur du substrat.

- La figure 5 décrit une variante de système de lecture mettant en oeuvre le procédé de lecture selon l'invention.

- La figure 6 décrit une autre variante de système de lecture mettant en oeuvre le procédé de lecture selon l'invention adapté pour une lecture de données situées dans une pluralité de plans situés dans l'épaisseur du substrat

## DESCRIPTION DETAILLEE DE L'INVENTION

### Support de stockage de données

Le support selon l'invention utilise des défauts présents dans un substrat diamant pour stocker les données.

Le diamant est l'un des matériaux les plus stables et les plus résistants que l'on connaisse. La très forte liaison carbone-carbone en fait un matériau très résistant à la fois mécaniquement et chimiquement. C'est donc un candidat de choix pour la production d'un substrat ne s'altérant pas dans le temps. De plus, il est transparent dans la gamme des longueurs d'onde optiques visibles. Il est donc compatible avec l'utilisation des méthodes optiques utilisées pour l'enregistrement (par exemple les disques compacts). Le substrat est préférentiellement de poli de qualité optique. Le substrat peut être de manière non limitative monocristallin et obtenu par dépôt chimique en phase vapeur dénommé CVD selon l'acronyme anglo-saxon pour « Chemical Vapor deposition ». La technologie actuelle permet la fabrication de substrats à base de diamant ayant quelques millimètres de côté et des épaisseurs de diamant monocristallin de quelques centaines de $\mu$m.

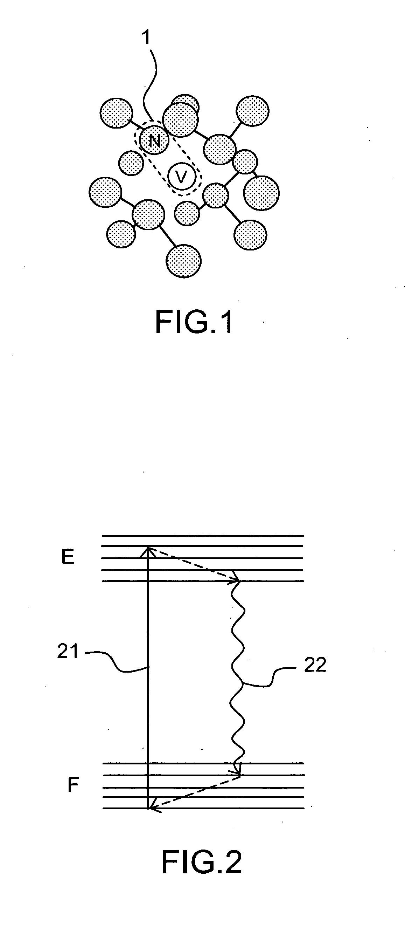

Les défauts dans le substrat utilisés pour stocker les données selon l'invention sont des centres NV. La figure 1 décrit la structure d'un centre NV 1 dans la maille cristalline du diamant. Les centres sont constitués d'un atome d'azote N substitué à un atome de carbone et couplé à une lacune V, le couple atome d'azote/ lacune constituant un défaut dans la maille cristalline du diamant. Il est possible de créer des centres NV localisés spatialement dans le diamant selon des procédés qui seront décrits ultérieurement.

La figure 2 décrit le principe de fluorescence d'un centre NV excité par un laser émettant dans le vert. Lorsque les centres NV du substrat diamant sont éclairés avec une onde lumineuse ayant une longueur d'onde 21 apte à exciter leur fluorescence, soit une longueur d'onde dans le vert, typiquement avec un laser émettant une longueur d'onde de 532 nm (trait plein symbolisant une longueur d'onde d'excitation 21), ils fluorescent en émettant une onde lumineuse ayant une bande spectrale dans le rouge centrée sur la longueur d'onde 650 nm (trait ondulé symbolisant la longueur d'onde de fluorescence 22). La présence de centres NV peut donc facilement être détectée optiquement.

De plus, ces centres sont très stables dans le temps et peuvent être excités par un faisceau laser sans se dégrader. Il n'y a pas de photo blanchiment. Les centres NV dans le diamant permettent de constituer des dispositifs séduisants pour enregistrer les données de façon pérenne. L'information est inscrite dans la structure cristalline du matériau et est donc beaucoup plus résistante que pour les procédés de stockage habituels.

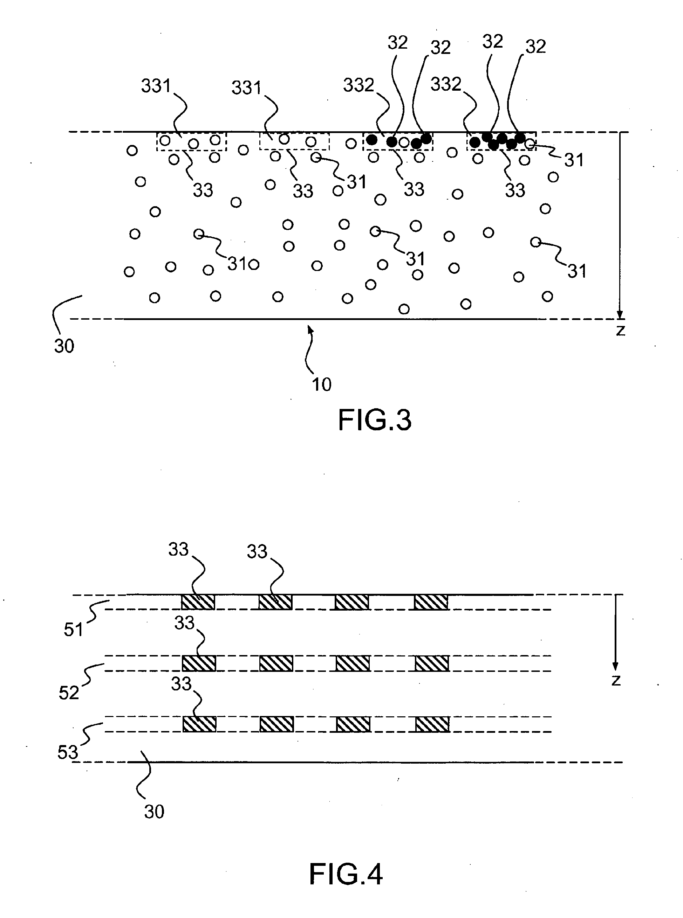

La figure 3 décrit le support de donnée 10 selon une variante de l'invention vu en coupe. Selon cette variante, les centres NV sont implantés dans un volume du substrat proche de sa surface.

Un substrat de diamant 30 contient des atomes de carbone C dont la densité est notée D(C). Une valeur typique de la densité D(C) est de $1,7.10^{29}$ atomes/$m^3$. Le substrat contient également des impuretés, dont des impuretés constituées d'atomes d'azote. Le taux d'impureté d'atomes d'azote TiN se définit par rapport entre le nombre d'atomes d'azote et le nombre d'atomes de carbone. L'invention est compatible avec tout type de substrat diamant.

A titre d'exemple, pour un substrat diamant commercial, quasi monocristallin, une valeur typique est TiN = 5 ppb (5 atomes d'azote pour 1 milliard d'atomes de carbone). La densité d'atomes d'azote résiduelle dans le substrat diamant, notée D(N)r est donc de :

$$D(N)r = TiN \times D(C).$$

Dans le présent exemple :

$$D(N)r = 1,7.10^{29} \times 5 \ 10^{-9} = 8,5 \ 10^{20} \ atomes / m^3$$

Une partie de ces impuretés peut constituer des centres NV, on a donc dans le substrat une densité résiduelle de centre NV, notée D(NV)r, inférieure à D(N)r. Cette densité résiduelle est liée au mode de fabrication du substrat. Les centres NV résiduels sont notés 31 sur la figure 3 et sont présents dans toute l'épaisseur du substrat.

Il est par ailleurs possible d'implanter des centres NV 32 localisés spatialement, selon différents procédés décrits plus loin.

Le support de donnée selon l'invention comprend des zones élémentaires de stockage 33 localisées spatialement qui peuvent avoir deux états distincts, selon que des centres NV ont été implantés ou non dans ces zones.

Un premier état correspond à une zone élémentaire de stockage qui n'a pas subi d'implantation de centres NV, référencée 331. A cet état correspond un nombre Nr de centres NV résiduels 31 présents dans le volume de ladite zone.

Un deuxième état correspond à une zone élémentaire de stockage qui a subi une implantation de centres NV , référencée 332. A cet état correspond un nombre de centres NV implantés noté Ni dans ladite zone.

Les informations élémentaires stockées, dénommées « bit » correspondent aux zones élémentaires pouvant prendre deux états distincts. Par exemple un niveau de fluorescence correspondant à la fluorescence d'une zone élémentaire dans le deuxième état modifié implanté représente un bit de valeur 1. Un niveau de fluorescence correspondant à la fluorescence d'une zone élémentaire dans le premier état non implanté ou seuls sont présents les centres NV résiduels représente un bit de valeur 0.

Une fois les données enregistrées, un système de lecture peut lire les données par voie optique en d'une part éclairant les zones élémentaires 33 avec une onde lumineuse apte à exciter la fluorescence des centres NV et d'autre part en détectant une intensité de fluorescence émise par ces zones. La valeur de l'intensité détecté par le système de lecture est fonction de l'état de la zone émettrice : une intensité I1 correspond à une zone élémentaire dans le premier état, une intensité I2 correspond à une zone élémentaire dans le deuxième état.

Préférentiellement les zones élémentaires sont situées dans au moins un plan du substrat.

Selon la première variante de l'invention décrite figure 3, les centres NV sont créés en surface du substrat, typiquement dans une profondeur de 30 nm à 40 nm. Les zones élémentaires de stockage 33 sont situées dans un plan 51 proche de la surface.

Selon une deuxième variante préférée de l'invention décrite figure 4, les centres NV sont crées dans au moins une partie du volume du substrat diamant, et les zones élémentaires 33 sont situées dans une pluralité de plans 51, 52 et 53 séparés entre eux dans l'épaisseur du substrat selon l'axe z. La capacité de stockage du support est ainsi augmentée. La densité d'information stockée est fonction du nombre de plans ou couches exploitables. Un exemple d'estimation du nombre de couches qui peuvent être réalisées est calculé en considérant un substrat diamant de 500 $\mu$m d'épaisseur, réalisé par la technologie CVD, et une résolution du système de lecture selon l'axe z de 1$\mu$m. En supposant une séparation entre couches adjacentes également de l'ordre de 1$\mu$m, on obtient 250 couches exploitables.

Dans le cas d'un codage binaire, pour faciliter la lecture, il est préférable que les zones élémentaires soient toutes de taille identique et régulièrement espacées. Les zones élémentaires sont préférablement mais non limitativement circulaires. Pour la suite nous considérerons des zones élémentaires circulaires de diamètre $\Phi$.

Pour obtenir une densité de stockage élevée, le diamètre $\Phi$ des zones élémentaires de stockage ainsi que la distance d entre deux zones doivent être faibles. Typiquement un diamètre $\Phi$ compris entre 30 nm à 100 nm correspond à des valeurs compatibles avec le procédé d'implantation de centres NV décrit dans le document [1].

Pour des zones qui ne sont pas circulaires, la surface de ces zones peut être typiquement comprise entre 1000 nm$^2$ et 10000 nm$^2$.

Les contraintes sur la distance d et le diamètre $\Phi$ sont fonction du mode de lecture qui sera utilisé pour lire les données stockées. On définit le volume d'analyse, noté Va, comme étant le volume de substrat pour lequel une intensité lumineuse de fluorescence des centres NV situés dans ce volume est détectée par le système optique de lecture. Le volume d'analyse Va correspondre au volume élémentaire résolu, c'est à dire au volume élémentaire qui peut être lu séparément par le système de lecture. Le volume d'analyse se définit par une surface d'analyse dans le plan du substrat multiplié par une profondeur d'analyse dans l'épaisseur du substrat selon l'axe z.

Selon une variante de l'invention, un zone élémentaire unique est située à l'intérieur du volume d'analyse Va.

Selon une autre variante de l'invention plusieurs zones élémentaires sont situées à l'intérieur du volume d'analyse Va. Dans ce cas, les zones élémentaires ne peuvent être résolues par le système de lecture. Le signal qui est capté par le dispositif de lecture correspond dans ce cas à la somme des intensités de fluorescence des zones élémentaires présentes dans le volume élémentaire résolu par le système de lecture.

La résolution maximum de moyens d'optique classique est la limite de diffraction, sensiblement donnée par la longueur d'onde de fluorescence des centres NV référencée 22, typiquement 650 nm.

Lorsque $\Phi$ est compris entre 30 nm à 100 nm, et que la distance qui sépare deux zones élémentaires d est de l'ordre de 30nm à 200 nm, les zones élémentaires ne sont pas résolues par des moyens d'optique classique. Pour résoudre une zone élémentaire et donc pouvoir mesurer l'intensité de fluorescence émise uniquement par cette zone, il est nécessaire de faire appel à des technologies plus complexes, par exemple décrite dans le document [2].

Pour permettre une lecture fiable des données, il est nécessaire d'implanter un nombre suffisant de centres NV par zone élémentaire pour, à la lecture des données, pouvoir sortir le signal du bruit.

Le bruit est constitué par l'intensité de fluorescence due aux centres NV résiduels présent dans le volume d'analyse Va lors de la lecture. Pour évaluer ce bruit, il est nécessaire de calculer ce nombre de centres NV résiduels Nr présents dans le volume d'analyse Va du dispositif de lecture. L'intensité émise, correspondant au bruit, est proportionnelle au nombre de centres NV résiduels présent dans le volume d'analyse. On a :

$$Nr = D(NV)r \, . \, Va$$

Deux types de lecture peuvent être envisagés.

Un premier type de lecture correspond à un système optique standard limité par la diffraction. Deux points sources séparés d'une distance inférieure à la longueur d'onde émise ne peuvent être séparés optiquement. Un microscope confocal est un exemple d'un tel système. La dimension caractéristique de la zone d'analyse du système optique sur la surface du substrat est typiquement de l'ordre de la longueur d'onde de fluorescence $\lambda$, référencée 22, typiquement égale à 650 nm. La surface de la zone d'analyse est de l'ordre $\lambda^2$. De plus, dans l'axe du faisceau selon l'axe z, la profondeur de la zone d'analyse définie par la microscopie est dans le meilleur des cas de l'ordre de $\lambda$. Le volume d'analyse à prendre en compte est donc de l'ordre de $\lambda^3$. Afin de simplifier, il est supposé que l'ensemble du volume d'analyse est éclairé par la source lumineuse d'éclairage. Si tel n'est pas le cas, il convient de prendre en considération pour les calculs qui vont suivre le volume éclairé par la source, contenu dans le volume d'analyse à la place du volume d'analyse.

Le nombre des centres NV résiduels présents dans le volume d'analyse est donc donné par :

$$Nr = D(NV)r. \, \lambda^3$$

En fonction de la nature et du mode de fabrication du substrat, D(NV)r varie dans la limite de :

EP 2 774 149 B1

$$D(NV)r < D(N)r.$$

Pour obtenir un premier ordre de grandeur de ce nombre, correspondant à une valeur haute, on considère que l'on a un centre NV par atome d'azote :

$$D(NV)r = D(N)r.$$

Avec la valeur de D(N)r calculée précédemment on calcule ainsi :

$$Nr = 200 .$$

Cette valeur correspond au nombre de centres NV résiduels dans le volume d'analyse, pour une zone d'analyse de dimension $\lambda$ à laquelle correspond un volume d'analyse $\lambda^3$. L'intensité de fluorescence associée à l'ensemble de ces centres NV résiduels correspond à l'intensité du bruit.

Une autre hypothèse consiste à considérer un centre NV pour deux atomes d'azote. Dans ce cas Nr = 100.

La condition pour sortir l'information du bruit est qu'il faut un nombre de centres NV implantés dans une zone élémentaire, noté Ni, supérieur au nombre de centres NV résiduels présents dans le volume d'analyse, dans les exemples précédents 100 ou 200. Soit I2 l'intensité de fluorescence associée à la fluorescence d'une zone élémentaire de stockage dans le deuxième état implanté, il faut donc que I2 soit supérieure à l'intensité du bruit.

Pour le cas d'une zone élémentaire de stockage dans le deuxième état implanté de surface $\lambda^2$ (correspondant à la surface de la zone d'analyse) et un taux de remplissage de 1/2 , la densité de bit que l'on peut inscrire sur le substrat est de :

$$D(bit) = 0.5/\lambda^2 = 100 \text{ Mbit/cm}^2$$

Il est possible d'augmenter la densité d'information stockée sur le substrat en implantant au travers d'un masque avec des ouvertures dont la taille est limitée par la résolution de la lithographie électronique, selon la technique décrite dans le document [1]. Il est possible d'obtenir couramment des ouvertures d'un diamètre 80 nm. Pour cet exemple, le nombre de zones élémentaires pouvant être implantées à l'intérieur d'une surface égale à $\lambda^2$, qui correspond à la surface de la zone d'analyse, est de l'ordre de 32 en considérant un taux de remplissage de 1/2.

On peut coder autant de niveaux d'intensité de fluorescence qu'il y a de zones élémentaires. Lorsque aucune zone élémentaire n'est implantée, l'intensité émise correspond à l'intensité de bruit , égale à l'intensité de fluorescence des centres NV résiduels contenus dans le volume d'analyse $\lambda^3$, en supposant bien entendu que la surface du substrat correspondant à ce volume est éclairée. Il est possible d'implanter des centres NV dans 1, 2 ... jusqu'aux 32 zones élémentaires. La zone élémentaire n'est pas résolue par le dispositif de lecture, mais il est possible de recueillir lors de la lecture une intensité égale à un multiple entier de I2 jusqu'à 32xI2. C'est la distinction entre tous ces niveaux qui permet de récupérer l'information. On peut donc stocker l'équivalent de 5 bits dans un volume d'analyse, ce qui porte la capacité à 500 Mbit/cm$^2$.

Dans cet exemple, pour que le signal de niveau le plus faible sorte du bruit, il faut également que le nombre de centres NV implantés dans une seule zone soit supérieur à l'intensité de bruit.

Un deuxième type de lecture correspond à un système permettant de résoudre deux zones élémentaires séparées d'une distance inférieure à $\lambda$. Dans ce cas le volume à prendre en compte pour l'évaluation du bruit est inférieur à $\lambda^3$, et le nombre de centres NV résiduels participant au bruit lors de la lecture doit être recalculé et est inférieur dans ce cas à 100. Le nombre de centres NV à implanter dans chaque zone élémentaire pour permettre au signal de sortir du bruit peut être dimensionné en conséquence. Mais la condition générale d'un nombre de centres NV implantés supérieur au nombre de centres NV résiduels présents dans le volume d'analyse reste valable.

Dans le cas où la résolution du système de lecture correspond à la dimension d'une zone élémentaire de stockage, la capacité n'est plus limitée que par la taille de cette zone élémentaire. Avec par exemple 80 nm de diamètre et un taux de remplissage de ½, on obtient une capacité de 8 Gbit/cm$^2$.

Le volume à prendre en compte pour le calcul de l'intensité de bruit est plus faible que précédemment, la contrainte sur le nombre de centres NV implantés par zone élémentaire pour sortir le signal du bruit est moins sévère.

Le procédé de fabrication du substrat selon l'invention peut s'effectuer de différentes manières.

Une première méthode comprend une première étape qui consiste à réaliser une couche d'atomes d'azote insérés dans la maille. Cette couche d'azote peut être obtenue par bombardement ionique ou par delta-doping [3]. Une couche uniforme d'atomes d'azote répartis en surface du substrat est ainsi obtenue. Pour créer les centres NV à partir des atomes d'azote, il est nécessaire de créer des lacunes qui vont s'associer aux atomes d'azote.

Une première possibilité est de créer ces lacunes par bombardement électronique, par exemple, en utilisant des faisceaux d'énergie supérieure à 200 keV [4]. Ensuite, pour obtenir les centres NV, il faut que ces lacunes migrent vers les atomes d'azote. Ceci est obtenu par recuit, typiquement à une température d'au moins 800 °C.

Une technique alternative est d'utiliser un masque de PMMA [1]. Pour réaliser un support selon l'invention, les ouvertures correspondent uniquement aux zones élémentaires de stockage devant être implantées (bit 1). Les atomes d'azote sont implantés au travers des trous. Un recuit est ensuite effectué pour créer les centres NV. Les centres NV sont ainsi spatialement localisés où il est souhaité.

D'après la publication [5], l'implantation d'ions d'azote dans le diamant est contrainte par les valeurs suivantes :

- La fluence ne doit pas dépasser $10^{14}$ azote/cm$^2$, sinon le diamant devient amorphe

- pour obtenir une bonne précision latérale (de l'ordre de 10 nm), l'énergie d'implantation ne doit pas dépasser 20 keV à cause du phénomène de « straggling ». Dans ce cas, le rendement de conversion des atomes d'azote en centres NV est de 5%.

Si l'on implante avec une fluence de $10^{14}$ N/cm$^2$, pour un diamètre $\Phi$ de zone élémentaire de 80 nm, le nombre d'ions implantés est de 6400. Si l'énergie d'implantation est de 20 keV, compte tenu du rendement de conversion de 5 %, on a donc 320 NV implantés dans la zone élémentaire. Cette valeur est supérieure à 200, et donc le nombre de centres NV implantés dans une zone élémentaire est suffisant pour que le signal dépasse le bruit.

Pour la réalisation de zones élémentaires selon des couches situées à l'intérieur du substrat, on peut utiliser plusieurs faisceaux d'électrons focalisés au même point afin d'atteindre localement une densité d'électrons suffisante pour créer des lacunes pouvant ensuite se combiner aux atomes d'azotes présents dans le substrat afin de former des centres NV. On peut ainsi contrôler la localisation des centres NV dans les trois dimensions.

Une technique alternative d'écriture consiste à utiliser plusieurs faisceaux optiques focalisés au même point. L'intensité élevée résultant de la somme des intensités de chacun des faisceaux permet d'atteindre des densités pouvant provoquer des dommages dans le cristal et donc des lacunes. Une possibilité est d'utiliser des impulsions optiques très courtes (par exemple femtoseconde) pour atteindre des intensités optiques suffisantes.

## Procédé de lecture du support de stockage de données

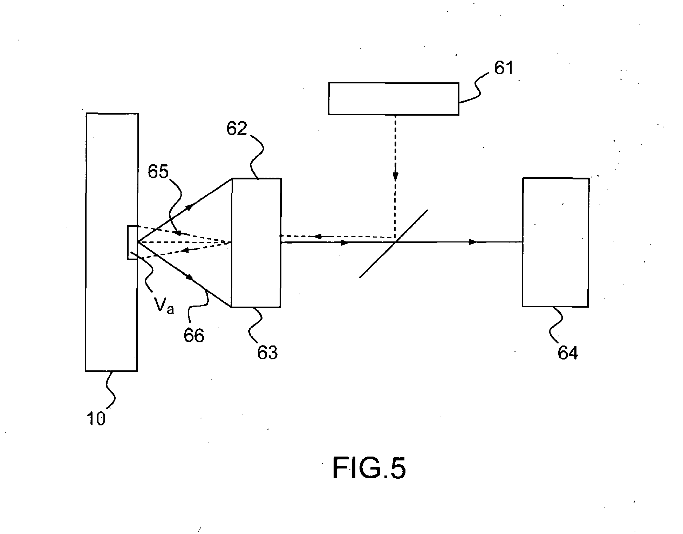

Un exemple de système de lecture du support 10 décrit précédemment est décrit figure 5. Le procédé de lecture mis en oeuvre par ce système comprend les étapes suivantes:

- éclairer le substrat 30 avec la source lumineuse 61 comprenant une longueur d'onde 21 apte à exciter la fluorescence desdits centres NV, cette source étant couplée à des moyens optiques d'éclairement 62 aptes à générer un faisceau lumineux 65 éclairant des centres NV
- détecter et traiter un faisceau lumineux de fluorescence 66 correspondant à une intensité lumineuse de fluorescence émise à une longueur d'onde de fluorescence 22 provenant des centres NV situés à l'intérieur du volume d'analyse Va, à l'aide de moyens de collecte 63 et de détection 64, de manière à lire la donnée stockée dans le volume

L'intensité détectée est fonction des intensités élémentaires provenant des zones élémentaires éclairées et situées dans le volume d'analyse Va.

Les intensités élémentaires peuvent prendre une première valeur I1 correspondant au premier état possible de la zone élémentaire et une deuxième valeur I2 correspondant au deuxième état possible de la zone élémentaire.

Préférentiellement, le procédé comprend l'étape supplémentaire de déplacer l'un par rapport à l'autre le substrat et les moyens d'éclairement 62, de collecte 63 et de détection 64 de manière à lire une autre donnée stockée dans une autre zone dudit plan dudit substrat

L'éclairement des zones élémentaires dans lesquelles sont stockées les données à lire par la source lumineuse est réalisé par des moyens d'éclairement apte à illuminer une zone donnée du substrat. Préférentiellement, cette zone est de dimension supérieure ou égale au volume d'analyse Va.

Le faisceau lumineux de fluorescence 66 émis par les centres NV excités est collecté à l'aide de moyens de collecte, ces moyens collectant l'intensité de fluorescence des centres NV situés à l'intérieur du volume d'analyse Va. Le faisceau lumineux de fluorescence 66 est ensuite détecté et traité par des moyens de détection 64.

L'exemple du système illustré sur la figure 5 est une variante où la lumière issue de la source lumineuse et la lumière émise par fluorescence traversent un même système optique. Par exemple une partie des moyens d'éclairement 62 coïncide avec une partie des moyens de collecte 63, l'intensité émise étant détectée puis traitée par les moyens de détection 64.

Selon une variante préférée de l'invention, la collecte de l'intensité de fluorescence s'effectue à l'aide d'un microscope confocal.

Lorsque les données sont enregistrées selon des couches situées dans l'épaisseur du substrat, la lecture est possible et même facilitée par le fait que le substrat de diamant est transparent aux longueurs d'onde d'excitation et de fluorescence.

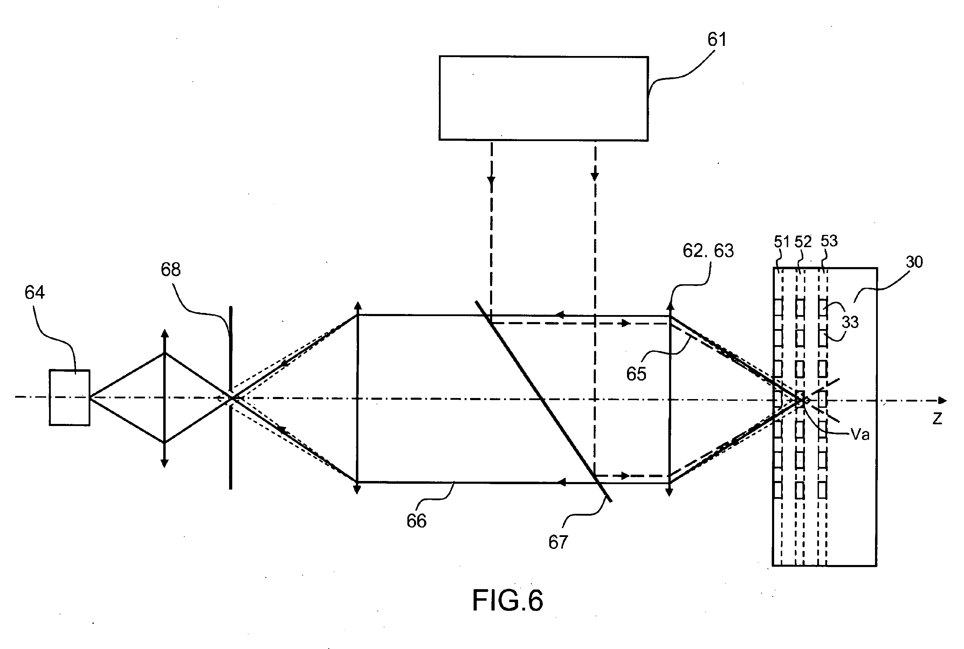

La figure 6 décrit un exemple de dispositif adapté pour la lecture d'un tel support. Il est possible de focaliser le faisceau d'éclairement 65 à différentes profondeurs du substrat, de manière à activer préférentiellement la fluorescence des centres NV d'une couche donnée. Les moyens de collecte, tel que le microscope confocal, peuvent également être réglés de manière à lire le plan adressé par le faisceau d'éclairement.

En effet sur le dispositif de la figure 6, la voie d'éclairement et la voie de fluorescence ne sont superposées qu'au niveau de l'objectif de microscope au moyen d'une lame dichroïque 67. Il est ainsi possible d'agir indépendamment sur chacun des faisceaux une fois qu'ils sont séparés. Notamment, une pupille de filtrage confocal 68 est placée sur un foyer secondaire du faisceau lumineux de fluorescence 66 pour réaliser le montage confocal en dehors du trajet du faisceau d'éclairement. Le faisceau d'éclairement n'est donc pas affecté par le montage confocal. Seule la lumière passant au travers de la pupille du montage confocal est transmise vers le détecteur. Seuls les centres NV dont l'image est placée au voisinage immédiat de cette pupille ont une fraction notable de leur fluorescence transmise vers le détecteur. La fluorescence des autres centres est arrêtée par la pupille. On définit ainsi une distance d'analyse selon l'axe z autour du point objet. En tenant compte de la résolution transverse du montage, on peut ainsi définir le volume d'analyse Va de sorte qu'il ne comprenne qu'un seul plan contenant des zones élémentaires.

La lecture de supports utilisant l'enregistrement en surface, où le faisceau d'éclairement doit traverser plusieurs surfaces enregistrées avant d'atteindre la surface à lire, est plus difficile à mettre en oeuvre que la méthode selon l'invention. Et lorsque la technique d'enregistrement utilise une surface métallique réfléchissante, la lecture tridimensionnelle du support est problématique à mettre en oeuvre.

## REFERENCES

[1] P Spinicelli, A Dréau, L Rondin, F Silva, J Achard, S Xavier, S Bansropun, T Debuisschert, S Pezzagna, J Meijer, V Jacques and J-F Roch « Engineered arrays of nitrogen-vacancy color centers in diamond based on implantation of CN- molecules through nanoapertures" New Journal of Physics 13 (2011)025014).

[2] Eva Rittweger, Kyu Young Han, Scott E. Irvine, Christian Eggeling & Stefan W. Hell, « STED microscopy reveals crystal colour centres with nanometric résolution », Nature Photonics 3, 144 - 147 (2009)

[3] J. Achard, A. Tallaire, et al. « The control of growth parameters in the synthesis of high-quality single crystalline diamond by CVD », Journal of Crystal Growth 284, 396-405 (2005).

[4] J. W. Steeds, S. Charles, T. J. Davis, A. Gilmore, J. Hayes, D. Pickard, and J. E. Butler. "Creation and mobility of self-interstitials in diamond by use of a transmission electron microscope and their subsequent study by photoluminescence microscopy". Diamond and Related Materials, 8(1) :94 - 100, 1999.

[5] S Pezzagna, B Naydenov, F Jelezko, J Wrachtrup and J Meijer, « Creation efficiency of nitrogen-vacancy centres in diamond », New Journal of Physics 12 (2010) 065017

## Revendications

1. Support de stockage de données (10) comprenant un substrat à base de diamant (30) comprenant :

   - des centres NV (1) insérés dans une maille cristalline dudit substrat

     o chaque centre NV étant constitué d'un atome d'azote substitué à un atome de carbone et couplé à une lacune, le couple atome d'azote/lacune constituant un défaut dans ladite maille cristalline;
     o lesdits centres NV étant aptes à émettre une onde lumineuse à une longueur d'onde de fluorescence (22) lorsque ledit substrat est éclairé par une source lumineuse à une longueur d'onde d'excitation (21) apte à exciter la fluorescence desdits centres NV (1), ladite longueur d'onde de fluorescence (22) étant distincte de ladite longueur d'onde d'excitation (21)

- ledit substrat comprenant des centres NV résiduels (31) selon une concentration donnée (D(NV)r) ; **caractérisé en ce que** :
- ledit substrat comprend en outre une pluralité de zones élémentaires de stockage de données (33) distinctes,
- lesdites zones élémentaires pouvant être altérées de façon à modifier le nombre de centre NV, définissant deux états distincts fonction des données stockées et aptes à être distingués :

  o un premier état (331) non modifié où le premier nombre de centres NV est égal au nombre (Nr) de centres NV résiduels (31) présents dans ladite zone,
  o un deuxième état (332) modifié où le deuxième nombre de centres NV comprend un nombre donné (Ni) de centres NV additionnels (32) implantés dans ladite zone;

- le premier nombre et le deuxième nombre étant distincts

2. Support de stockage de données (10) selon la revendication 1 **caractérisé en ce que** lesdites données sont aptes à être lues par détection d'une modulation d'une intensité lumineuse de fluorescence émise par lesdits centres NV (31,32) situés dans lesdites zones élémentaires dudit substrat (30), ladite détection collectant une intensité lumineuse de fluorescence liée au nombre de centres NV situés dans un volume d'analyse donné (Va) dudit substrat, et **en ce que** le nombre de centres NV implantés (Ni) par zone élémentaire dans ledit deuxième état (332) est supérieur au produit de la concentration de centres NV résiduel D(NV)r par le volume d'analyse (Va), de façon à détecter la présence d'une zone élémentaire dans ledit deuxième état.

3. Support de stockage de données selon l'une des revendications 1 ou 2 **caractérisé en ce que** les zones élémentaires sont situées dans au moins un plan du substrat (51, 52, 53) ;

4. Support de stockage de données selon l'une des revendications précédentes **caractérisé en ce que** lesdites zones élémentaires sont situées dans une pluralité de plans (51, 52, 53) séparés entre eux dans l'épaisseur dudit substrat diamant (30)

5. Support de stockage de données selon l'une des revendications précédentes **caractérisé en ce que** lesdites zones élémentaires ont une surface comprise entre 1000 $nm^2$ et 10000 $nm^2$.

6. Support de stockage de données selon l'une des revendications précédentes **caractérisé en ce que** lesdites zones élémentaires sont circulaires de diamètre (Φ) compris entre 30nm et 100 nm.

7. Support de stockage de données selon l'une des revendications précédentes **caractérisé en ce qu'**une zone élémentaire unique est présente à l'intérieur dudit volume d'analyse (Va)

8. Support de stockage de données selon l'une des revendications précédentes **caractérisé en ce que** qu'une pluralité de zones élémentaires situées dans un même plan (51,52 53) sont présentes à l'intérieur dudit volume d'analyse (Va)

9. Support de stockage de données selon l'une des revendications précédentes **caractérisé en ce que** le nombre de centres NV implantés (Ni) dans une zone élémentaires dans ledit deuxième état est supérieur à environ 100.

10. Utilisation d'un substrat à base de diamant (30) selon l'une des revendications précédentes comme support de stockage de données.

11. Procédé de lecture d'un support de stockage de données selon l'une des revendications 1 à 10 comprenant les étapes suivantes :

  - éclairer ledit substrat (30) avec ladite source lumineuse (61) comprenant une longueur d'onde (21) apte à exciter la fluorescence desdits centres NV, ladite source étant couplée à des moyens optiques d'éclairement (62) aptes à générer un faisceau lumineux (65) éclairant des centres NV,
  - détecter et traiter un faisceau lumineux de fluorescence (66) correspondant à une intensité lumineuse de fluorescence émise à une longueur d'onde de fluorescence (22) provenant des centres NV situés à l'intérieur dudit volume d'analyse (Va), à l'aide de moyens de collecte (63) et de détection (64), de manière à lire la donnée stockée dans ledit volume,

- ladite intensité étant fonction des intensités élémentaires provenant desdites zones élémentaires éclairées et situées dans le volume d'analyse,

- lesdites intensités élémentaires pouvant prendre une première valeur (11) correspondant audit premier état de ladite zone élémentaire et une deuxième valeur (12) correspondant audit deuxième état de ladite zone élémentaire.

12. Procédé de lecture selon la revendication 11 **caractérisé en ce qu'**il comprend l'étape supplémentaire suivante :

- déplacer l'un par rapport à l'autre ledit substrat et lesdits moyens d'éclairement (62), de collecte (63) et de détection (64) de manière à lire une autre donnée stockée dans une autre zone dudit plan dudit substrat.

13. Procédé de lecture selon les des revendications 11 ou 12 **caractérisé en ce que** ledit faisceau optique d'éclairement et ledit faisceau lumineux de fluorescence traversent un même système optique

14. Procédé de lecture selon la revendication 13 **caractérisé en ce que** le système optique est un système de microscopie confocale

15. Procédé de lecture selon l'une des revendications 12 à 14 **caractérisé en ce que** lesdits moyens optiques d'éclairement (62) sont aptes à focaliser un faisceau lumineux (65) provenant de ladite source d'éclairement (61) à différentes profondeurs du substrat de manière à pouvoir exciter lesdites zones élémentaires situées dans une pluralité de plans (51, 52, 53) séparés entre eux dans l'épaisseur dudit substrat diamant (30)

16. Procédé de lecture selon la revendication 15 **caractérisé en ce que** lesdits moyens de collecte (63) sont aptes à capter ledit faisceau lumineuse de fluorescence (66) provenant de centres NV appartenant auxdites zones élémentaires situées dans une pluralité de plans (51, 52, 53) séparés entre eux dans l'épaisseur dudit substrat diamant (30).

**Patentansprüche**

1. Datenträgermedium (10), das ein Substrat auf der Basis von Diamant (30) umfasst, umfassend:

- in eine kristalline Zelle des Substrats eingesetzte NV-Zentren (1)
∘ wobei jedes NV-Zentrum von einem Stickstoffatom im Austausch gegen ein Kohlenstoffatom gebildet und an eine Leerstelle gekoppelt ist, wobei das Paar Stickstoffatom/Leerstelle einen Fehler in der kristallinen Zelle darstellt,
∘ wobei die NV-Zentren imstande sind, eine Lichtwelle mit einer Fluoreszenzwellenlänge (22) zu senden, wenn das Substrat von einer Lichtquelle mit einer Erregungswellenlänge (21) beleuchtet wird, die imstande ist, die Fluoreszenz der NV-Zentren (1) zu erregen, wobei die Fluoreszenzwellenlänge (22) sich von der Erregungswellenlänge (21) unterscheidet,
- wobei das Substrat residuelle NV-Zentren (31) in einer bestimmten Konzentration (D(NV)r) umfasst, **dadurch gekennzeichnet, dass**:
- das Substrat ferner eine Vielzahl unterschiedlicher elementarer Datenspeicherzonen (33) umfasst,
- wobei die elementaren Zonen derart verändert sein können, so dass die Anzahl der NV-Zentren geändert wird, wobei zwei unterschiedliche Zustände als Funktion der gespeicherten Daten definiert werden und imstande sind, unterschieden zu werden:

∘ ein erster nicht geänderter Zustand (331), in dem die erste Anzahl von NV-Zentren gleich der Anzahl (Nr) der residuellen NV-Zentren (31) ist, die in der Zone vorhanden sind,
∘ ein zweiter geänderter Zustand (332), in dem die zweite Anzahl von NV-Zentren eine bestimmte Anzahl (Ni) zusätzlicher, in die Zone implantierter NV-Zentren (32) umfasst,

- wobei die erste Anzahl und die zweite Anzahl unterschiedlich sind.

2. Datenträgermedium (10) nach Anspruch 1, **dadurch gekennzeichnet, dass** die Daten durch Detektion einer Modulation einer Fluoreszenzlichtintensität lesbar sind, die von den NV-Zentren (31,32) gesendet wird, die sich in den elementaren Zonen des Substrats (30) befinden, wobei die Detektion eine Fluoreszenzlichtintensität sammelt, die mit der Anzahl von NV-Zentren verbunden ist, die sich in einem bestimmten Analysevolumen (Va) des Substrats befinden, und dass die Anzahl der NV-Zentren (Ni), die je Elementarzone im zweiten Zustand (332) implantiert sind, größer als das Produkt der Konzentration residueller NV-Zentren D(NV)r mit dem Analysevolumen (Va) ist, so dass die Präsenz einer elementaren Zone im zweiten Zustand ermittelt wird.

3. Datenträgermedium nach einem der Ansprüche 1 oder 2, **dadurch gekennzeichnet, dass** sich die elementaren Zonen in mindestens einer Ebene des Substrats (51, 52, 53) befinden.

4. Datenträgermedium nach einem der vorangehenden Ansprüche, **dadurch gekennzeichnet, dass** sich die elementaren Zonen in einer Vielzahl von Ebenen (51, 52, 53) befinden, die voneinander in der Dicke des Diamant-Substrats (30) getrennt sind.

5. Datenträgermedium nach einem der vorangehenden Ansprüche, **dadurch gekennzeichnet, dass** die elementaren Zonen eine Fläche zwischen 1000 $nm^2$ und 10000 $nm^2$ haben.

6. Datenträgermedium nach einem der vorangehenden Ansprüche, **dadurch gekennzeichnet, dass** die elementaren Zonen kreisrund mit einem Durchmesser ($\Phi$) zwischen 30 nm und 100 nm sind.

7. Datenträgermedium nach einem der vorangehenden Ansprüche, **dadurch gekennzeichnet, dass** eine einzige elementare Zone im Innern des Analysevolumens (Va) vorhanden ist.

8. Datenträgermedium nach einem der vorangehenden Ansprüche, **dadurch gekennzeichnet, dass** eine Vielzahl elementarer Zonen, die sich in einer selben Ebene (51, 52 53) befinden, im Innern des Analysevolumens (Va) vorhanden sind.

9. Datenträgermedium nach einem der vorangehenden Ansprüche, **dadurch gekennzeichnet, dass** die Anzahl in eine elementare Zone im zweiten Zustand implantierter NV-Zentren (Ni) größer als zirka 100 ist.

10. Verwendung eines Substrats auf der Basis von Diamant (30) nach einem der vorangehenden Ansprüche als Datenträgermedium.

11. Leseverfahren eines Datenträgermediums nach einem der Ansprüche 1 bis 10, das die folgenden Schritte umfasst:

- Beleuchten des Substrats (30) mit der Lichtquelle (61), die eine Wellenlänge (21) umfasst, die imstande ist, die Fluoreszenz der NV-Zentren zu erregen, wobei die Quelle mit optischen Beleuchtungsmitteln (62) gekoppelt ist, die imstande sind, einen Lichtstrahl (65) zu erzeugen, der NV-Zentren beleuchtet,
- Ermitteln und Bearbeiten eines Fluoreszenzlichtstrahls (66), der einer Fluoreszenzlichtintensität entspricht, der in einer Fluoreszenzwellenlänge (22) gesendet wird, aus den NV-Zentren, die sich im Innern des Analysevolumens (Va) befinden, mit Hilfe von Sammel- (63) und Detektionsmitteln (64), um die in dem Volumen gespeicherte Angabe zu lesen,
- wobei die Intensität Funktion der elementaren Intensitäten aus den beleuchteten elementaren Zonen, die sich in dem Analysevolumen befinden, ist,
- wobei die elementaren Intensitäten einen ersten Wert (I1) annehmen können, der dem ersten Zustand der elementaren Zone entspricht, und einen zweiten Wert (I2), der dem zweiten Zustand der elementaren Zone entspricht.

12. Leseverfahren nach Anspruch 11, **dadurch gekennzeichnet, dass** es den folgenden zusätzlichen Schritt umfasst:

- Verlagern im Verhältnis zueinander des Substrats und der Beleuchtungs-(62), Sammel- (63) und Detektionsmittel (64) derart, um eine andere, in einer anderen Zone der Ebene des Substrats gespeicherte Angabe zu lesen.

13. Leseverfahren nach den Ansprüchen 11 oder 12, **dadurch gekennzeichnet, dass** der optische Beleuchtungsstrahl und der Fluoreszenzlichtstrahl ein selbes optisches System durchqueren.

14. Leseverfahren nach Anspruch 13, **dadurch gekennzeichnet, dass** das optische System ein konfokales Mikroskopiesystem ist.

15. Leseverfahren nach einem der Ansprüche 12 bis 14, **dadurch gekennzeichnet, dass** die optischen Beleuchtungsmittel (62) imstande sind, einen Lichtstrahl (65) zu fokussieren, der von der Lichtquelle (61) kommt, in verschiedenen Tiefen des Substrats, um die elementaren Zonen erregen zu können, die sich in einer Vielzahl von Ebenen (51, 52, 53) befinden, die voneinander in der Dicke des Diamant-Substrats (30) getrennt sind.

16. Leseverfahren nach Anspruch 15, **dadurch gekennzeichnet, dass** die Sammelmittel (63) imstande sind, den Fluoreszenzlichtstrahl (66) aus den NV-Zentren, die zu den elementaren Zonen gehören, die sich in einer Vielzahl von voneinander in der Dicke des Diamant-Substrats (30) getrennten Ebenen (51, 52, 53) befinden, einzufangen.

**Claims**

1. A data storage medium (10) comprising a diamond-based substrate (30) comprising:

   - NV centres (1) inserted in a crystalline cell of said substrate,
   ◦ each NV centre being made up of a nitrogen atom substituted with a carbon atom and coupled to a vacancy, the nitrogen/vacancy atom pair forming a defect in said crystalline cell;
   ◦ said NV centres being capable of emitting a light wave at a fluorescence wavelength (22) when said substrate is illuminated by a light source at an excitation wavelength (21) capable of exciting the fluorescence of said NV centres (1), said fluorescence wavelength (22) being distinct from said excitation wavelength (21);
   - said substrate comprising residual NV centres (31) according to a given concentration (D(NV)r), **characterised in that**:
   - said substrate further comprises a plurality of distinct elementary data storage zones (33);
   - said elementary zones being able to be altered so as to modify the number of NV centres, defining two distinct states as a function of the stored data and capable of being distinguished between:

      ◦ a first non-modified state (331) where the first number of NV centres is equal to the number (Nr) of residual NV centres (31) present in said zone;
      ◦ a second modified state (332) where the second number of NV centres comprises a given number (Ni) of additional NV centres (32) implanted in said zone;

   - the first number and the second number being distinct.

2. The data storage medium (10) according to claim 1, **characterised in that** said data are capable of being read by detecting a modulation of a fluorescence light intensity emitted by said NV centres (31, 32) located in said elementary zones of said substrate (30), said detection collecting a fluorescence light intensity associated with the number of NV centres located in a given analysis volume (Va) of said substrate, and **in that** the number of NV centres (Ni) implanted per elementary zone in said second state (332) is greater than the product of multiplying the concentration of the residual NV centres D(NV)r by the analysis volume (Va), so as to detect the presence of an elementary zone in said second state.

3. The data storage medium (10) according to claim 1 or 2, **characterised in that** said elementary zones are located in at least one plane of the substrate (51, 52, 53).

4. The data storage medium according to any one of the preceding claims, **characterised in that** said elementary zones are located in a plurality of planes (51, 52, 53) separated from each other in the thickness of said diamond substrate (30).

5. The data storage medium according to any one of the preceding claims, **characterised in that** said elementary zones have a surface area between 1,000 nm$^2$ and 10,000 nm$^2$.

6. The data storage medium according to any one of the preceding claims, **characterised in that** said elementary zones are circular, with a diameter ($\theta$) between 30 nm and 100 nm.

7. The data storage medium according to any one of the preceding claims, **characterised in that** a single elementary zone is present inside said analysis volume (Va).

8. The data storage medium according to any one of the preceding claims, **characterised in that** a plurality of elementary zones located in the same plane (51, 52, 53) is present inside said analysis volume (Va).

9. The data storage medium according to any one of the preceding claims, **characterised in that** the number of NV centres (Ni) implanted in an elementary zone in said second state is more than approximately 100.

10. The use of a diamond-based substrate (30) according to any one of the preceding claims as a data storage medium.

11. A method for reading a data storage medium according to any one of claims 1 to 10, comprising the following steps:

- illuminating said substrate (30) with said light source (61) comprising a wavelength (21) capable of exciting the fluorescence of said NV centres, said source being coupled to optical illumination means (62) capable of generating a light beam (65) illuminating said NV centres;
- detecting and processing a fluorescence light beam (66) corresponding to a fluorescence light intensity emitted at a fluorescence wavelength (22) originating from NV centres located inside said analysis volume (Va), using collection (63) and detection (64) means, so as to read the data stored in said volume;
- said intensity depending on the elementary intensities originating from said illuminated elementary zones and located in said analysis volume;
- said elementary intensities being able to assume a first value (I1) corresponding to said first state of said elementary zone and a second value (I2) corresponding to said second state of said elementary zone.

12. The reading method according to claim 11, **characterised in that** it comprises the following additional step:

- moving said substrate and said illumination (62), collection (63) and detection (64) means relative to each other so as to read another item of data stored in another zone of said plane of said substrate.

13. The reading method according to claim 11 or 12, **characterised in that** said optical illumination beam and said fluorescence light beam pass through a same optical system.

14. The reading method according to claim 13, **characterised in that** said optical system is a confocal microscopy system.

15. The reading method according to any one of claims 12 to 14, **characterised in that** said optical illumination means (62) are capable of focusing a light beam (65) originating from said light source (61) at different depths of said substrate so as to be able to excite said elementary zones located in a plurality of planes (51, 52, 53) separated from each other in the thickness of said diamond substrate (30).

16. The reading method according to claim 15, **characterised in that** said collection means (63) are capable of capturing said fluorescence light beam (66) originating from NV centres belonging to said elementary zones located in a plurality of planes (51, 52, 53) separated from each other in the thickness of said diamond substrate (30).

FIG.1

FIG.2

FIG.3

FIG.4

FIG.5

FIG.6

EP 2 774 149 B1

## RÉFÉRENCES CITÉES DANS LA DESCRIPTION

**Documents brevets cités dans la description**

- WO 2010010344 A

**Littérature non-brevet citée dans la description**

- **P SPINICELLI ; A DRÉAU ; L RONDIN ; F SILVA ; J ACHARD ; S XAVIER ; S BANSROPUN ; T DEBUISSCHERT ; S PEZZAGNA ; J MEIJER.** Engineered arrays of nitrogen-vacancy color centers in diamond based on implantation of CN- molecules through nanoapertures. *New Journal of Physics,* 2011, vol. 13, 025014
- **EVA RITTWEGER ; KYU YOUNG HAN ; SCOTT E. IRVINE ; CHRISTIAN EGGELING ; STEFAN W. HELL.** STED microscopy reveals crystal colour centres with nanometric résolution. *Nature Photonics,* 2009, vol. 3, 144-147
- **J. ACHARD ; A. TALLAIRE et al.** The control of growth parameters in the synthesis of high-quality single crystalline diamond by CVD. *Journal of Crystal Growth,* 2005, vol. 284, 396-405
- **J. W. STEEDS ; S. CHARLES ; T. J. DAVIS ; A. GILMORE ; J. HAYES ; D. PICKARD ; J. E. BUTLER.** Creation and mobility of self-interstitials in diamond by use of a transmission electron microscope and their subsequent study by photoluminescence microscopy. *Diamond and Related Materials,* 1999, vol. 8 (1), 94-100
- **S PEZZAGNA ; B NAYDENOV ; F JELEZKO ; J WRACHTRUP ; J MEIJER.** Creation efficiency of nitrogen-vacancy centres in diamond. *New Journal of Physics,* 2010, vol. 12, 065017